# EUROPÄISCHE PATENTSCHRIFT

(11) **EP 1 945 485 B1**
(45) Veröffentlichungstag und Bekanntmachung des Hinweises auf die Patenterteilung: **12.12.2012**
(21) Anmeldenummer: 06807089.5
(22) Anmeldetag: 09.10.2006
(51) Int. Cl.: B60S 1/34

(54) **WISCHERANLAGE FÜR FRONTSCHEIBEN AN KRAFTFAHRZEUGEN**
WIPER SYSTEM FOR FRONT WINDSCREENS OF MOTOR VEHICLES
SYSTEME D'ESSUIE-GLACE POUR PARE-BRISE DANS DES AUTOMOBILES

(30) Priorität: 31.10.2005 DE 102005052036
(43) Veröffentlichungstag der Anmeldung: 23.07.2008
(73) Patentinhaber: ROBERT BOSCH GMBH, 70442 Stuttgart (DE)
(72) Erfinder: SCHABANEL, Francois, F-94100 Saint Maur des Fossés (FR); ESCHENBRENNER, Nicolas, F-67100 Strasbourg (FR)
(86) Internationale Anmeldenummer: PCT/EP2006/067203
(87) Internationale Veröffentlichungsnummer: WO 2007/051688

(56) Entgegenhaltungen:
- EP-A2- 1 584 527
- DE-A1- 10 130 915
- DE-A1- 10 241 894
- DE-C- 630 834
- GB-A- 2 088 707

## Beschreibung

Die Erfindung betrifft eine Wischeranlage für Frontscheiben an Kraftfahrzeugen.

Wischeranlagen dienen der Aufrechterhaltung einer freien Sicht bei einer spontan auftretenden Beaufschlagung von Fahrzeugscheiben mit die Sicht behindernden Substanzen, insbesondere bei niederschlagsbedingten Sichtbehinderungen durch widrige Witterungsbedingungen.

In modernen Kraftfahrzeugen finden sich zunehmend Frontscheiben mit gesteigerter Funktionalität. Das heißt, moderne Frontscheiben müssen neben der Gewährleistung einer ungehinderten Sicht des Fahrers weitere sicherheitsrelevante Funktionen vom mechanischen Insassenschutz bis hin zur statischen Einbeziehung in Festigkeitskalkulationen von Karosserie und Fahrgastraum erfüllen. Daraus folgen einerseits Veränderungen der Frontscheibengeometrie und Größe, andererseits Veränderungen des Frontscheibenmaterials, um den gesteigerten Sicherheits- und Festigkeitsanforderungen genügen zu können.

Resultierend aus neuen Frontscheibenkonzepten ergeben sich teilweise erhöhte Anforderungen an einzusetzende Wischeranlagen. Ein vergrößertes Sichtfeld verändert die Sehgewohnheiten des Fahrers. Es dient zweifellos der Sicherheit, wenn diesen veränderten Sehgewohnheiten auch bei widrigen Witterungsbedingungen entsprochen wird, also die Frontscheibe möglichst vollständig von der Wischeranlage gereinigt werden kann, das heißt, die Wischer-Wischerblätter müssen unter gleichmäßigem Anpressdruck über möglichst große Flächenbereiche geführt werden.

Eine Bewegung des Wischerblattes wird häufig durch einen schwenkbaren Arm realisiert, welcher über ein Gelenkteil mit einem Befestigungsteil verbunden ist, welches um eine feste Achse geschwenkt wird. Der Antrieb des Befestigungsteiles erfolgt über ein in der Regel verdeckt installiertes Wischergestänge, welches in Verbindung mit einem Wischermotor eine alternierende Linearbewegung auf einen mit dem Befestigungsteil verbundenen Hebel oder ein entsprechend ausgelegtes Lagerteil überträgt. Eine schwenkbewegliche Fixierung des Befestigungsteiles sorgt für eine alternierende Schwenkbewegung des Befestigungsteiles, die sich auf den Wischerarm überträgt. Am Ende des schwenkbaren Wischerarmes ist ein elastisches Wischerblatt angebracht. Damit das Wischerblatt der gekrümmten Fläche der Frontscheibe folgen kann, ist das Gelenkteil üblicherweise so konzipiert, dass der schwenkbare Arm senkrecht zur Schwenkebene des Befestigungsteiles auslenkbar mit dem Befestigungsteil verbunden und durch Federkraft in Richtung Frontscheibe vorgespannt ist, wodurch der erforderliche Anpressdruck am Wischerblatt erzeugt wird.

Damit das Wischerblatt einen möglichst großen Flächenbereich der Frontscheibe überstreichen kann, wird häufig angestrebt, die Schwenkachse möglichst nah an oder in die Frontscheibe zu verlegen. Diese Forderung resultiert teilweise auch aus den im Fahrzeugbau zur Verfügung stehenden Einbauräumen, die eine Platzierung des Wischerantriebes unter der Frontscheibe zweckmäßig erscheinen lassen.

Eine derartige Scheibenwischvorrichtung ist aus der EP-A-1 584 527 bekannt.

Es ist daher bekannt, eine die Schwenkachse der Wischeranlage bestimmende Lagerwelle, auf der ein den Wischerarm tragendes Befestigungsteil angebracht wird, durch eine Öffnung in der Frontscheibe zu führen. Diese Lösung hat jedoch den Nachteil, dass ein dafür erforderlicher Durchbruch der Frontscheibe bei vielen modernen Glasmaterialien, die für Frontscheiben eingesetzt werden, nicht mehr zulässig ist. Insbesondere bei häufig verwendeten Verbundgläsern ist eine derartige die Flächenstabilität und das Bruchverhalten beeinträchtigende Maßnahme unzulässig.

Die Aufgabe der Erfindung besteht darin, eine Möglichkeit anzugeben, einen möglichst großen Flächenbereich einer Frontscheibe von einer Wischeranlage überstreichen zu lassen, ohne dass eine Durchführung einer Lagerwelle durch die Frontscheibe erforderlich wird.

Die Aufgabe wird erfüllt durch eine Wischeranlage mit den Merkmalen von Anspruch 1. Die abhängigen Ansprüche 2 bis 7 geben vorteilhafte Ausgestaltungen einer erfindungsgemäßen Wischeranlage an.

Die Erfindung beruht auf einer räumlichen Trennung der Schwenkachse, um welche eine Wischeranordnung während der Reinigung der Frontscheibe geschwenkt wird, von der Lagerwelle, die der Aufnahme eines Befestigungsteiles dient, das den Wischerarm mit dem Wischerblatt trägt. Die Schwenkachse wird in an sich bekannter Weise durch eine ortsfeste Welle, einen Lagerbolzen oder ähnliches festgelegt. Auf dieses die Schwenkachse bestimmende Bauteil wird ein schwenkbewegliches Lagerteil aufgebracht. Erfindungsgemäß weist dieses Lagerteil eine senkrecht zur Schwenkachse erstreckte Trägerstruktur auf, welche für die Aufnahme eines Befestigungsmittels, beispielsweise einer Lagerwelle, ausgelegt ist. Dieses Befestigungsmittel dient der Aufnahme eines Befestigungsteiles, das über ein Gelenkteil mit einem Wischerarm verbunden ist. Wird die Anordnung aus Wischerarm, Gelenkteil und Befestigungsteil verdrehsicher mit dem Befestigungsmittel an der Trägerstruktur des Lagerteiles verbunden, so bildet die Achse, um die das Lagerteil geschwenkt wird, gleichzeitig die Achse, um die die gesamte Wischeranordnung geschwenkt wird.

Durch die mit einer derartigen Anordnung verbundene räumliche Trennung der Schwenkachse, um welche die Wischeranordnung geschwenkt wird, von der Lagerwelle, die der Aufnahme des Befestigungsteiles dient, ist es möglich, die ortsfeste Welle, welche die Lage der Schwenkachse bestimmt, derart zu verkürzen, dass sie unter der Frontscheibe im Inneren eines Fahrzeuges angeordnet werden kann, ohne die Frontscheibe zu berühren. Eine Durchführung durch die Frontscheibe wird damit überflüssig. Die Erstreckung der Trägerstruktur wird so gewählt, dass die Lagerwelle für die Aufnahme des Befestigungsteiles unterhalb des Randes der Frontscheibe angeordnet wird und ausreichend Platz für eine Schwenkung des Lagerteiles bleibt, ohne dass es zu einer Berührung der Frontscheibe kommt.

Herkömmliche Frontscheiben sind in der Regel relativ flach mit geringer Krümmung ausgeführt und weisen im gesamten von Wischerblättern zu überstreichenden Bereich geringe Krümmungsänderungen auf. Für einen Einsatz an derartigen Scheiben entsprechend ausgelegte Wischeranlagen führen mindestens ein Wischerblatt über die Scheibe, welches aus einer elastischen Halterung besteht, die ein bandförmiges Gummiprofil mit einer für ein Abziehen der Scheibe geeigneten Lippe aufnimmt. Die elastischen Eigenschaften des Wischerblattes erlauben den Ausgleich geringer Unterschiede zwischen der Krümmung der Scheibe und der Krümmung des Wischerblattes im entspannten Zustand. Dies sorgt neben einer optimierten Materialwahl und einer angepassten Lippenform am Wischerblatt in Zusammenhang mit einer entsprechenden Ausrichtung der aufgesetzten Lippe des Wischerblattes in Bezug auf die Normale der überstrichenen Zone der Scheibe für eine effektive und gleichmäßige Freihaltung der Frontscheibe von Spritz- und Niederschlagswasser. Insbesondere wird in der Regel angestrebt, das Wischerblatt so anzuordnen, dass während des Abziehens Stauchungen der Gummilippe vermieden werden. Bei bidirektional arbeitenden Wischeranlagen erfolgt meist ein entsprechendes Umklappen der Lippe des Wischerblattes beim Richtungswechsel, was ein weitgehend senkrechtes Aufsetzen des Wischerblattes auf der Scheibe erfordert. All diese Anforderungen lassen sich mit der Erfindung auf vorteilhafte Weise erfüllen.

Für eine Verwendung der Erfindung an Panoramascheiben ist es jedoch möglicherweise nicht ausreichend, die Flächenerfüllung durch Verlagerung der Schwenkachse unter die Scheibe zu verbessern.

Panoramascheiben bilden im Gegensatz zu herkömmlichen Frontscheiben eine stärker gekrümmte Begrenzungsfläche des Fahrgastraumes. Der Fahrgastraum wird in einem größeren Raumwinkelbereich von der Panoramascheibe umgeben, als das bei herkömmlichen Frontscheiben mit geringer Krümmung der Fall ist. Panoramascheiben weisen daher im Gegensatz zu herkömmlichen Frontscheiben entweder insgesamt eine stärkere Krümmung oder Flächenbereiche mit stark voneinander abweichenden Krümmungsradien auf. Der Einsatz von Panoramascheiben.ist in der Regel mit einer zurückgesetzten A-Säule verbunden. Aus Sicherheitsgründen müssen auch die seitlichen Randbereiche einer Panoramascheibe in die von der Wischeranlage überstrichene Fläche mit einbezogen werden. Selbst stark gekrümmte seitliche Randbereiche einer Panoramascheibe dürfen zu keiner Zeit die Sicht des Fahrers behindern. Diese Vorgaben sind durch zulassungsrelevante Normen abgedeckt.

Die gegenüber herkömmlichen Frontscheiben stärkere oder stark unterschiedliche Krümmung einer Panoramascheibe kann in keinem Fall durch die elastischen Eigenschaften des Wischerblattes ausgeglichen werden.

Zudem würde ein steil stehendes Wischerblatt, weiches den Randbereich einer Panoramascheibe überstreichen soll, durch die gegenüber herkömmlichen Frontscheiben veränderte Orientierung dieses Randbereiches in einem sehr ungünstigen Angriffswinkel mit der Scheibe in Kontakt gebracht werden. Dieser ungünstige Angriffswinkel würde einerseits zu einer geringeren Wischleistung und einem evtl. erhöhten Verschleiß der Wischerlippe, andererseils zu sehr hohen Reibungskräften bei der Bewegung des Wischerblattes führen, da im Randbereich der Panoramascheibe die vom Wischergestänge übertragenen Kräfte zu einem erheblichen Teil senkrecht zur überstrichenen Fläche angreifen und damit zu einem zusätzlichen Anpressen des Wischerblattes an die Panoramascheibe führen würden. Da die Verbindung zwischen dem Wischergestänge und dem Befestigungsteil ohnehin den kurzen Hebel eines Systems darstellt, dessen langer Hebel durch den Wischerarm und das Wischerblatt gebildet wird, wären durch das Wischergestänge außerordentlich hohe Kräfte aufzubringen, um das Wischerblatt aus dem Randbereich der Panoramascheibe in den zentralen Bereich zurück zu schwenken. Bei üblicher Dimensionierung bestünde in Abhängigkeit vom Gleitverhalten der Wischerlippe auf der zu reinigenden Oberfläche zudem die Gefahr eines Blockierens des Wischers, was bei einer stark verschmutzten Frontscheibe zu einer akuten Gefährdung beteiligter Verkehrsteilnehmer führen würde. Die angesprochene Problematik wird durch bei hohen Geschwindigkeiten auftretende Windlasten noch verschärft.

Insbesondere der Winkel, in welchem die Lippe des Wischerblattes mit der Scheibe in Kontakt gebracht wird, muss beim Überstreichen einer Panoramascheibe somit an den jeweiligen Flächenbereich angepasst werden.

Beim einem Einsatz einer erfindungsgemäßen Wischeranlage an Panoramascheiben ist es daher Vorteilhaft, zusätzlich zum erfindungsgemäßen Lagerteil zur Verbindung von Wischerarm und Befestigungsteil ein Gelenkteil zu verwenden, welches in Abhängigkeit vom Hubwinkel eine Normalenkorrektur des Wischerblattes realisiert.

Dazu eignen sich beispielsweise Gelenkteile, die so ausgeführt sind, dass die Gelenkachse deutlich aus der Ebene senkrecht zur Hauptachse des Wischerarmes herausragt. Es hat sich gezeigt, dass in diesem Fall aerodynamische Vorteile mit dem Vorteil eines weitgehend senkrechten Aufsetzens der Lippe des Wischerblattes während des gesamten Wischvorganges auch vor Panoramascheiben kombiniert werden können. Ein derartiges Gelenkteil erzwingt eine Drehung des Wischerblattes um die Hauptachse des Wischerarmes, wenn sich der Winkel zwischen dem Wischerarm und dem Befestigungsteil ändert. Diese Drehung des Wischerblattes wird genutzt, um die Lippe des Wischerblattes stets annähernd senkrecht, zumindest jedoch ausreichend steil, über die Frontscheibe zu führen, auch wenn diese eine starke Krümmung aufweist.

Vorteilhaft ist die Verwendung eines einachsigen Gelenkteiles, dessen Gelenkachse zumindest in der Ebene, in der das Befestigungsteil geschwenkt wird, von der Senkrechten zur Hauptachse des Wischerarmes abweicht.

Vorteilhafterweise liegt die Abweichung zwischen der Gelenkachse des Gelenkteiles und der Senkrechten zur Hauptachse des Wischerarmes in der Ebene, in der das Befestigungsteil geschwenkt wird, im Bereich zwischen 5° und 45°. Besonders bewährt hat sich ein Winkelbereich zwischen 5° und 30°.

Ein in eine erfindungsgemäße Wischeranlage integriertes Gelenkteil lässt sich auf verschiedene Weise realisieren. Wichtig ist, dass es eine Schwenkung um eine Gelenkachse ermöglicht und angreifenden anders ausgerichteten Momenten eine ausreichende Festigkeit entgegen setzt. Beispielsweise kann das Gelenkteil zwei Augen umfassen, durch die Lagerbolzen führen. Für die Realisierung der Erfindung ist es unerheblich, ob das Gelenkteil ein separates Bauteil bildet oder unlösbar mit dem Wischerarm und/oder dem Befestigungsteil verbunden ist.

Beim Einsatz einer erfindungsgemäßen Wischeranlage an Panoramascheiben mit schwach gekrümmten Zentralbereich und stark gekrümmten Randbereichen ist es besonders vorteilhaft, wenn das Wischerblatt zwischen einer steilen Endposition im stark gekrümmten Randbereich der Panoramascheibe und einer flachen Endposition im zentralen schwächer gekrümmten Bereich der Panoramascheibe bewegt werden kann. Bei derartigen Systemen mit außen liegender Lagerung kann die Schwenkachse so angeordnet werden, dass sich erst bei einem relativ steil stehenden Wischerblatt eine deutliche Änderung des Winkels zwischen dem Wischerarm und dem Befestigungsteil ergibt. Dadurch überstreicht das Wischerblatt den relativ schwach gekrümmten zentralen Bereich der Panoramascheibe mit nahezu konstantem Anstellwinkel der Wischerlippe. Erst bei steiler stehendem Wischerblatt erfolgt ein deutliches erfindungsgemäßes Eindrehen des Wischerblattes, was eine Anpassung der Bewegung an den stärker gekrümmten Randbereich der Panoramascheibe ermöglicht. Dadurch müssen keine starken Krümmungsunterschiede durch eine elastische Verformung des Wischerblattes ausgeglichen werden, und es kann krümmungsunabhängig ein gleichmäßiger Anpressdruck über die gesamte Länge des Wischerblattes realisiert werden.

Die Ausrichtung der Schwenkachse, um die das Befestigungsteil geschwenkt wird und die auf einfache Weise durch ein erfindungsgemäßes Lagerteil zu beeinflussen ist, und der Winkel, um den die Gelenkachse des Gelenkteiles von der Ausrichtung der Hauptachse des Wischerarmes abweicht, stellen Parameter dar, durch deren Variation eine Anpassung der erfindungsgemäßen Wischeranlage an unterschiedliche geometrische Randbedingungen unterschiedlicher Panoramascheiben möglich wird. Die für die Aufrechterhaltung der Schwenkbewegung erforderlichen Kräfte können durch Variation der vorgenannten Parameter ebenfalls optimiert werden.

An einem Ausführungsbeispiel wird die Erfindung näher erläutert. Es zeigen:
- Fig. 1: eine schematische Darstellung eines erfindungsgemäßen LagerLeiles,
- Fig. 2: eine Darstellung eines vorteilhaften Gelenkteiles,
- Fig. 3: eine schematische Gesamtdarstellung einer erfindungsgemäßen Wischeranlage in verschiedenen Schwenkzuständen.

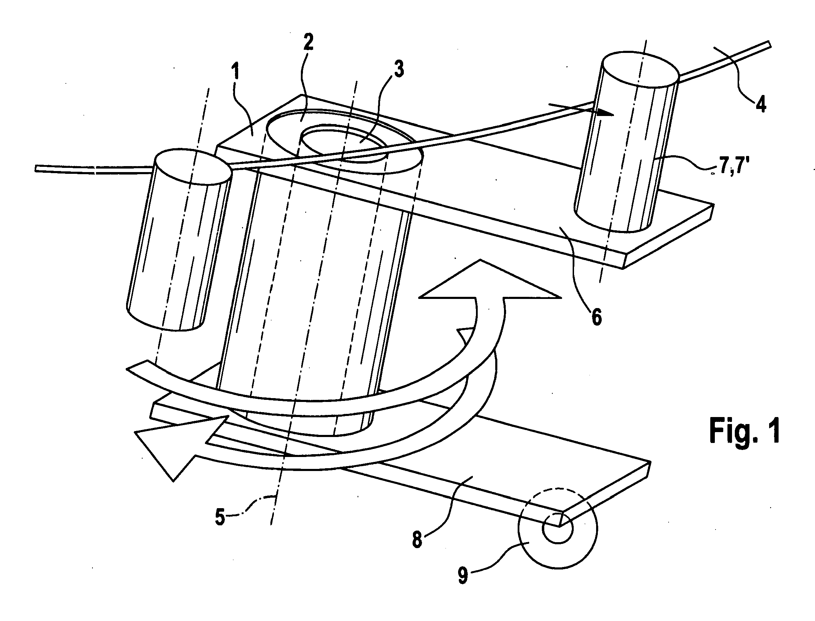

Figur 1 zeigt eine schematische Darstellung eines erfindungsgemäßen Lagerteiles 1. Eine Lagerbuchse 2 ist auf eine Lagerwelle 3 aufgeschoben, die ortsfest unterhalb einer als Panoramascheibe ausgeführten Frontscheibe 4 im Fahrzeuginneren angeordnet ist. Die Lagerwelle 3 bestimmt die Lage der Achse 5, um die das Lagerteil 1 geschwenkt werden kann. Das Lagerteil 1 umfasst weiterhin einen fest mit der Lagerbuchse verbundenen Träger 6, auf dem in einem festen Abstand zur Lagerbuchse 2 als Befestigungsmittel eine bolzenförmige Lagerwelle 7 befestigt ist. Diese Lagerwelle 7 dient der Aufnahme eines Befestigungsteiles, welches an dieser Stelle verdrehsicher mit dem Lagerteil 1 verbunden werden kann. Die Lagerbuchse 2 sorgt für eine schwenkbewegliche Anordnung des Lagerteiles 1 auf der Lagerwelle 3.

Auf diese Weise wird eine räumliche Trennung der Schwenkachse 5, um welche das Lagerteil, und damit die Wischeranordnung geschwenkt wird, von der Lagerwelle, die der Aufnahme des Befestigungsteiles dient, realisiert. Erst durch diese Trennung ist es möglich, die ortsfeste Welle 3, welche die Lage der Schwenkachse 5 bestimmt, derart zu verkürzen, dass sie unter der Frontscheibe 4 im Inneren eines Fahrzeuges angeordnet werden kann, ohne die Frontscheibe 4 zu berühren. Eine Durchführung durch die Frontscheibe wird damit überflüssig. Die Erstreckung des Trägers 6 wird so gewählt, dass die Lagerwelle 7 für die Aufnahme des Befestigungsteiles unterhalb des Randes der Frontscheibe 4 angeordnet wird und ausreichend Platz für eine Schwenkung des Lagerteiles 1 bleibt, ohne dass es zu einer Berührung der Frontscheibe 4 kommt. Die Pfeile verdeutlichen den Bewegungsablauf bei Betätigung der Wischeranlage. Im unteren Teil der Lagerbuchse 2 ist ein Hebel 8 angebracht, an dem das WischergesLänge angreift, was durch einen kugelförmigen Lagerkopf 9 symbolisiert wird.

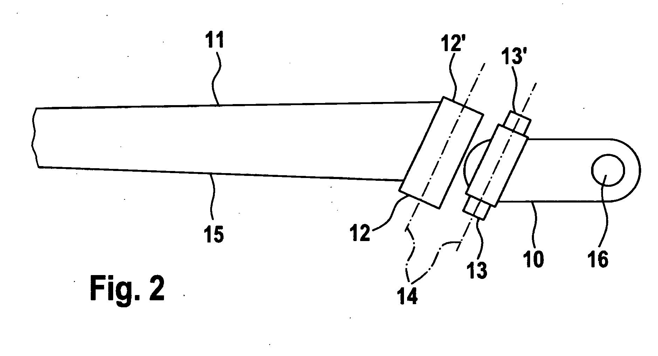

Figur 2 zeigt eine Darstellung eines vorteilhaften Gelenkteiles, wie es zusammen mit einem erfindungsgemäßen Lagerteil in Wischeranlagen an Panoramascheiben eingesetzt werden kann.

Das Gelenkteil verbindet ein Befestigungsteil 10 mit einem Wischerarm 11 einer Wischeranlage. Das Gelenkteil ist scharnierförmig ausgebildet. Fest mit dem Wischerarm 11 verbunden sind zwei Wangen 12, 12' durch die runde Öffnungen führen. Am Befestigungsteil 10 sind Lagerbolzen 13, 13' angebracht, die durch die Öffnungen in den Wangen 12, 12' führen. Auf diese Weise wird bei entsprechend starker Auslegung eine stabile Gelenkverbindung zwischen dem Wischerarm 11 und dem Befestigungsteil 10 realisiert, die eine Schwenkung um genau eine Gelenkachse 14 ermöglicht und angreifenden anders ausgerichteten Momenten eine ausreichende Festigkeit entgegen setzt. Das Gelenkteil stellt im vorliegenden Ausführungsbeispiel kein separates Bauteil dar, sondern wird durch eine entsprechende Ausgestaltung der miteinander verbindbaren Enden des Wischerarmes 11 und des Befestigungsteiles 10 gebildet.

Die Darstellung zeigt das beschriebene Gelenkteil im getrennten Zustand. Die Gelenkachse 14 ist gegenüber der Senkrechten zur Hauptachse 15 des Wischerarmes 11 geneigt. Dadurch wird ein vorteilhaftes Eindrehen des Wischerblattes während der bestimmungsgemäßen Schwenkbewegung des Befestigungsteiles 10 erzwungen, wenn mit dieser Schwenkbewegung eine zusätzliche Schwenkung des Wischerarmes 11 um die Gelenkachse 14 verbunden ist. Das Befestigungsteil 10 weist an einem Ende eine Befestigungsöffnung 16 auf in die das Befestigungsmittel 7 am Lagerteil 1 eingreift, um das Befestigungsteil 10 verdrehsicher mit dem Lagerteil 1 zu verbinden.

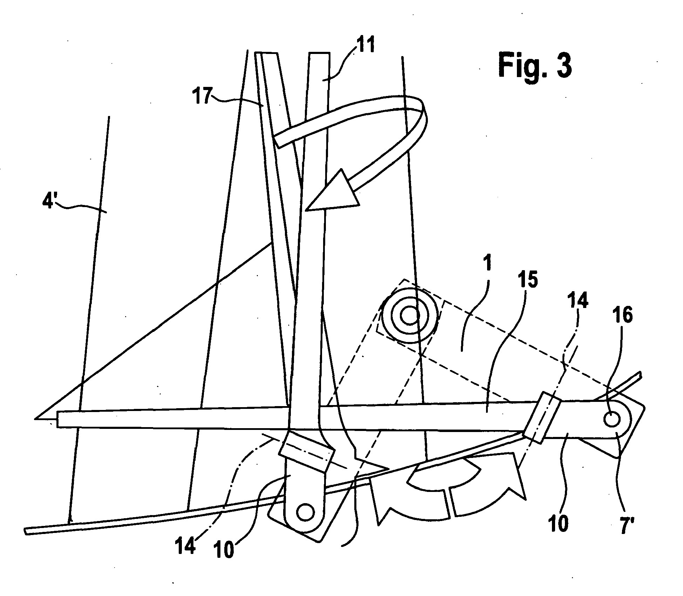

Figur 3 zeigt eine schematische Gesamtdarstellung einer erfindungsgemäßen Wischeranlage in verschiedenen Schwenkzuständen vor einer Panoramascheibe 4'. Befindet sich die aus Wischerarm 11 mit Wischerblatt, Gelenkteil und Befestigungsteil 10 bestehende Anordnung in annähernd waagerechter Position, verdeckt der Wischerarm 11 in der vorliegenden Ansicht das Wischerblatt, welches so angeordnet ist, dass die Lippe 17 des Wischerblattes annähernd senkrecht auf der Panoramascheibe 4' aufsitzt. Der Wischerarm 11 bildet eine Verlängerung des Befestigungsteiles 10 und ist mit diesem durch ein asymmetrisches Gelenkteil mit schräger Gelenkachse 14 verbunden. Das Befestigungsteil 10 ist um eine feste Achse schwenkbar, die durch eine Lagerwelle 3 bestimmt wird, die verdeckt unter der Panoramascheibe endet. In die Befestigungsöffnung 16 greift ein zum erfindungsgemäßen Lagerteil 1 gehörendes Befestigungsmittel in Form einer bolzenförmigen Lagerwelle 7' ein, und ermöglicht eine verdrehsichere, jedoch justierbare Verbindung des Befestigungsteiles 10 mit dem Lagerteil 1.
Wird die Wischeranordnung in eine steile Position geschwenkt, wird der Wischerarm 11 aufgerichtet und gleichzeitig aus der Richtung der Verlängerung des Befestigungsteiles 10 heraus geschwenkt. Diese Schwenkung erfolgt um die Gelenkachse 14, die gegen die Hauptachse 15 des Wischerarmes geneigt ist. Das Ausschwenken des Wischerarmes 11 aus der Richtung der Verlängerung des Befestigungsteiles 10 ist deshalb mit einer Drehung des Wischerarmes 11 um seine Hauptachse verbunden, was durch die Sichtbarwerdung der Lippe 17 des Wischerblattes verdeutlicht wird. Auf diese Weise kann gesichert werden, dass die Lippe 17 des Wischerblattes auch im seitlichen Randbereich der Panoramascheibe 4', der gegenüber dem zentralen Bereich eine deutlich veränderte Orientierung aufweist, nahezu senkrecht oder zumindest ausreichend steil aufsetzt, um eine schonende und effektive Reinigungswirkung zu erzielen.

## Patentansprüche

1. Wischeranlage für Frontscheiben an Kraftfahrzeugen, umfassend mindestens ein Wischerblatt, das an einem schwenkbaren Wischerarm (11) über die Frontscheibe (4) geführt werden kann, mindestens ein um eine Achse (5) schwenkbares Lagerteil (1), mindestens ein mit diesem Lagerteil (1)verdrehsicher verbindbares Befestigungsteil (10) und mindestens ein einachsiges Gelenkteil, welches den Wischerarm (11) mit dem Befestigungsteil (10) verbindet, wobei sich die Position der Verbindung von Lagerteil (1) und Befestigungsteil (10) neben der Achse (5) befindet, um die das Lagerteil (1) geschwenkt wird und das Lagerteil (1) eine Lagerbuchse (2) umfasst, die schwenkbeweglich auf eine ortsfeste Lagerwelle (3) aufgesetzt ist, wobei die Achse (5) durch die Frontscheibe (4) verläuft, wobei sich senkrecht zur Schwenkachse (5) eine mit der Lagerbuchse (2) verbundene Trägerstruktur (6) erstreckt, welche außerhalb der Schwenkachse (5) mit einem Befestigungsmittel (7) verbunden ist, an welchem das Befestigungsteil (10) der Wischeranordnung befestigt werden kann, **dadurch gekennzeichnet, dass** das Befestigungsmittel (7) eine bolzenförmige Lagerwelle (7') umfasst, das Befestigungsteil (10) eine Befestigungsöffnung (16) aufweist, in die die bolzenförmige Lagerwelle (7') eingeführt werden kann und Mittel umfasst sind, die eine verdrehsichere, aber justierbare Befestigung des Befestigungsteiles (10) an der bolzenförmigen Lagerwelle (7') ermöglichen, wobei die ortsfeste Lagerwelle (3) im Fahrzeuginneren angeordnet ist, ohne die Frontscheibe (4) zu berühren und das Befestigungsmittel (7), an welchem das Befestigungsteil (10) der Wischeranordnung befestigt werden kann, sich in jeder Schwenkposition des Lagerteiles (1) neben der Frontscheibe (4) befindet.

2. Wischeranlage nach Anspruch 1, **dadurch gekennzeichnet, dass** die Gelenkachse (14) des Gelenkteiles in der Ebene, in der das Befestigungsteil (10) geschwenkt wird, von der Senkrechten zur Hauptachse (15) des Wischerarmes (11) abweicht.

3. Wischeranlage nach Anspruch 2, **dadurch gekennzeichnet, dass** die Abweichung zwischen der Gelenkachse (14) des Gelenkteiles und der Senkrechten zur Hauptachse (15) des Wischerarmes (11) in der Ebene, in der das Befestigungsteil (10) geschwenkt wird, im Bereich zwischen 5° und 45° liegt.

4. Wischeranlage nach Anspruch 3, **dadurch gekennzeichnet, dass** die Abweichung zwischen der Gelenkachse (14) des Gelenkteiles und der Senkrechten zur Hauptachse (15) des Wischerarmes (11) in der Ebene, in der das Befestigungsteil (10) geschwenkt wird, im Bereich zwischen 5° und 30° liegt.

5. Wischeranlage nach einem der Ansprüche 2 bis 4, **dadurch gekennzeichnet, dass** das Gelenkteil zwei Augen umfasst, durch die Lagerbolzen (13, 13') führen.

6. Wischeranlage nach einem der Ansprüche 2 bis 5, **dadurch gekennzeichnet, dass** das Gelenkteil unlösbar mit dem Wischerarm (11) und/oder dem Befestigungsteil (10) verbunden ist.

7. Wischeranlage nach einem der Ansprüche 1 bis 6, **dadurch gekennzeichnet, dass** mindestens ein Wischerblatt zwischen einer steilen Endposition im stark gekrümmten Randbereich einer Panoramascheibe (4') und einer flachen Endposition im zentralen schwächer gekrümmten Bereich der Panoramascheibe (4') bewegt werden kann.

## Claims

1. Wiper system for front windscreens of motor vehicles, comprising at least one wiper blade which can be guided over the front windscreen (4) on a pivotable wiper arm (11), at least one bearing part (1) which is pivotable about an axis (5), at least one fastening part (10) which is connectable to said bearing part (1) in a manner secure against rotation, and at least one single-axis articulation part, which connects the wiper arm (11) to the fastening part (10), wherein the position of the connection of the bearing part (1) and fastening part (10) is located next to the axis (5) about which the bearing part (1) is pivoted, and the bearing part (1) comprises a bearing bushing (2) which is placed pivotable onto a positionally fixed bearing shaft (3), wherein the axis (5) runs through the front windscreen (4), wherein a support structure (6) which is connected to the bearing bushing (2) extends perpendicularly to the pivot axis (5) and is connected outside the pivot axis (5) to a fastening means (7), to which the fastening part (10) of the wiper arrangement can be fastened, **characterized in that** the fastening means (7) comprises a bolt-shaped bearing shaft (7'), the fastening part (10) has a fastening opening (16) into which the bolt-shaped bearing shaft (7') can be inserted, and means permitting a rotationally secure, but adjustable fastening of the fastening part (10) to the bolt-shaped bearing shaft (7') are included, wherein the positionally fixed bearing shaft (3) is arranged in the vehicle interior without touching the front windscreen (4), and the fastening means (7) to which the fastening part (10) of the wiper arrangement can be fastened is located next to the front windscreen (4) in every pivoted position of the bearing part (1).

2. Wiper system according to Claim 1, **characterized in that** the axis of articulation (14) of the articulation part deviates from the perpendicular to the main axis (15) of the wiper arm (11) in the plane in which the fastening part (10) is pivoted.

3. Wiper system according to Claim 2, **characterized in that** the deviation between the axis of articulation (14) of the articulation part and the perpendicular to the main axis (15) of the wiper arm (11) in the plane in which the fastening part (10) is pivoted lies within the range of between 5° and 45°.

4. Wiper system according to Claim 3, **characterized in that** the deviation between the axis of articulation (14) of the articulation part and the perpendicular to the main axis (15) of the wiper arm (11) in the plane in which the fastening part (10) is pivoted lies within the range of between 5° and 30°.

5. Wiper system according to one of Claims 2 to 4, **characterized in that** the articulation part comprises two eyes, through which bearing bolts (13, 13') lead.

6. Wiper system according to one of Claims 2 to 5, **characterized in that** the articulation part is connected non-releasably to the wiper arm (11) and/or to the fastening part (10).

7. Wiper system according to one of Claims 1 to 6, **characterized in that** at least one wiper blade can be moved between a steep end position in the sharply curved border region of a wraparound windscreen (4') and a flat end position in the central, more gently curved region of the wraparound windscreen (4').

## Revendications

1. Système d'essuie-glace pour pare-brise de véhicules automobiles, comportant au moins un balai d'essuie-glace qui peut être guidé sur un pare-brise (4) au niveau d'un bras d'essuie-glace pivotant (11), au moins une partie de palier (1) pouvant pivoter autour d'un axe (5), au moins une partie de fixation (10) pouvant être reliée de manière bloquée en rotation à cette partie de palier (1) et au moins une partie d'articulation monoaxiale, laquelle partie d'articulation relie le bras d'essuie-glace (11) à la partie de fixation (10), la position de la liaison de la partie de palier (1) à la partie de fixation (10) étant située près de l'axe (5) autour duquel la partie de palier (1) est pivotée et la partie de palier (1) comporte une douille de palier (2) qui est placée de manière mobile en pivotement sur un arbre de palier fixe (3), l'axe (5) s'étendant à travers le pare-brise (4), une structure de support (6) reliée à la douille de palier (2) s'étendant perpendiculairement à l'axe de pivotement (5), laquelle structure de support est reliée, à l'extérieur de l'axe de pivotement (5), à un moyen de fixation (7) auquel la partie de fixation (10) de l'agencement d'essuie-glace peut être fixée, **caractérisé en ce que** le moyen de fixation (7) comporte un arbre de palier (7') en forme de boulon, la partie de fixation (10) comprend une ouverture de fixation (16) dans laquelle l'arbre de palier (7') en forme de boulon peut être introduit et des moyens sont prévus, lesquels permettent une fixation bloquée en rotation mais ajustable de la partie de fixation (10) à l'arbre de palier (7') en forme de boulon, l'arbre de palier fixe (3) étant disposé dans l'intérieur du véhicule, sans être en contact avec le pare-brise (4), et le moyen de fixation (7) auquel la partie de fixation (10) de l'agencement d'essuie-glace peut être fixée étant situé près du pare-brise (4) dans chaque position de pivotement de la partie de palier (1).

2. Système d'essuie-glace selon la revendication 1, **caractérisé en ce que** l'axe d'articulation (14) de la partie d'articulation diverge de la perpendiculaire à l'axe principal (15) du bras d'essuie-glace (11) dans le plan dans lequel la partie de fixation (10) est pivotée.

3. Système d'essuie-glace selon la revendication 2, **caractérisé en ce que** la divergence entre l'axe d'articulation (14) de la partie d'articulation et la perpendiculaire à l'axe principal (15) du bras d'essuie-glace (11) dans le plan dans lequel la partie de fixation (10) est pivotée se situe dans la plage entre 5° et 45°.

4. Système d'essuie-glace selon la revendication 3, **caractérisé en ce que** la divergence entre l'axe d'articulation (14) de la partie d'articulation et la perpendiculaire à l'axe principal (15) du bras d'essuie-glace (11) dans le plan dans lequel la partie de fixation (10) est pivotée se situe dans la plage entre 5° et 30°.

5. Système d'essuie-glace selon l'une quelconque des revendications 2 à 4, **caractérisé en ce que** la partie d'articulation comporte deux yeux traversés par des tourillons de palier (13, 13').

6. Système d'essuie-glace selon l'une quelconque des revendications 2 à 5, **caractérisé en ce que** la partie d'articulation est reliée de manière non amovible au bras d'essuie-glace (11) et/ou à la partie de fixation (10).

7. Système d'essuie-glace selon l'une quelconque des revendications 1 à 6, **caractérisé en ce qu'**au moins un balai d'essuie-glace peut être déplacé entre une position finale très inclinée dans la région de bord fortement courbée d'une vitre panoramique (4') et une position finale à plat dans la région centrale faiblement courbée de la vitre panoramique (4').
